# EUROPEAN PATENT APPLICATION

(11) **EP 2 257 064 A2**
(43) Date of publication of application: **01.12.2010**
(21) Application number: 09723546.9
(22) Date of filing: 17.03.2009
(51) Int. Cl.: H04N 7/173, H04N 5/44

(54) **METHOD AND APPARATUS FOR RECEIVING NOTIFICATION**

(30) Priority: 18.03.2008 US 37455 P; 28.03.2008 US 40309 P; 14.07.2008 US 80332 P; 24.07.2008 US 83309 P; 30.07.2008 US 84680 P
(71) Applicant: Samsung Electronics Co., Ltd., Suwon-si, Gyeonggi-do 442-742 (KR)
(72) Inventor: HWANG, In-Chul, Suwon-si Gyeonggi-do 443-727 (KR); RHIM, Eun-Hee, Yongin-si Gyeonggi-do 446-720 (KR); KIM, Mun-Jo, Suwon-si Gyeonggi-do 441-735 (KR)
(74) Representative: Fearnside, Andrew Simon
(86) International application number: PCT/KR2009/001325
(87) International publication number: WO 2009/116779

(57) **Abstract**

A method and an apparatus for receiving a notification in a terminal entity that uses a service provided from an outside of a residential network through a gateway entity.

## Description

### TECHNICAL FIELD

The present invention relates to a method and apparatus for receiving a notification, and more particularly, to a method and an apparatus for receiving a notification in a terminal entity of a residential network through a gateway entity.

### BACKGROUND ART

Internet protocol television (IPTV) service is a service for providing information, moving picture contents, and TV broadcasting through an IP network, that is, an ultra-high speed Internet network. As services combining communication and broadcasting has become widely available, interest in IPTV services has increased. Therefore, wide distribution of IPTV services may largely affect the content industry and electric appliances, as well as the communication and broadcasting industries.

The Open IPTV Forum (OIPF) has been recently established to discuss standardization of the set-top box. In this forum, a common standard that is independent from the IPTV service providers and providing the service subscribers with the IPTV service based on the common standard are being discussed.

The OIPF aims to make an interface and a hardware platform that are not dependent upon the IPTV service providers so that the subscriber may easily use the IPTV services provided by a plurality of IPTV service providers. According to OIPF architecture, the subscriber may use the IPTV services provided by a plurality of different IPTV service providers even when he/she does not have different set-top boxes, and thus, the range of services that may be selected by the subscriber can be expanded.

In order for the subscriber to use the IPTV services provided by the plurality of different IPTV service providers, functional architecture according to the OIPF includes a plurality of gateway entities for relaying services of the plurality of IPTV service providers to a residential network. The gateway entities include an application gateway (AG), an IP Multimedia Subsystem (IMS) gateway (IG), and a content and service protection (CSP) gateway (CG) according to the functional architecture of the OIPF. The gateway entities receive the IPTV services provided from a provider network and relay the IPTV services to terminal devices in the residential network.

### BRIEF DESCRIPTION OF THE DRAWINGS

FIG. 1 is a flowchart illustrating a method of receiving an in-session notification according to an embodiment of the present invention;
FIG. 2 is a flowchart illustrating a method of receiving an in-session notification according to another embodiment of the present invention;
FIGS. 3A and 3B illustrate a hypertext transfer protocol (HTTP) response message including information regarding a socket according to an embodiment of the present invention;
FIG. 4 is a flowchart illustrating a method of receiving an out-of-session notification according to an embodiment of the present invention;
FIGS. 5A and 5B illustrate data request and response messages regarding content of a notification according to an embodiment of the present invention;
FIG. 6 is a flowchart illustrating a method of receiving an out-of-session notification according to another embodiment of the present invention;
FIG. 7A is a block diagram of a notification receiving apparatus of a terminal entity according to an embodiment of the present invention;
FIG. 7B is a block diagram of a notification receiving apparatus of a terminal entity according to another embodiment of the present invention;
FIG. 8 is a flowchart illustrating a method of relaying a notification in a gateway entity according to an embodiment of the present invention; and
FIG. 9 is a block diagram of a gateway entity according to an embodiment of the present invention.

### DETAILED DESCRIPTION OF THE INVENTION

### TECHNICAL PROBLEM

The present invention provides a method and an apparatus for receiving a notification in a terminal entity of a residential network from an entity of a provider network, and also provides a computer readable recording medium having embodied thereon a program for implementing the above method.

### BEST MODE

According to an aspect of the present invention, there is provided a method of receiving a notification relating to a service in a terminal entity, the method including: initializing the service provided from an outside of a residential network through a gateway entity of the residential network by driving an application relating to the service; transmitting information regarding a session of the initialized service to the gateway entity; and receiving the notification relating to the service from the gateway entity, wherein the gateway entity relays a notification provided from the outside of the residential network to the terminal entity based on the information regarding the session of the service.

According to another aspect of the present invention, there is provided a method of receiving a notification in a terminal entity, the method including: receiving data regarding a type of a notification provided from an outside of a residential network through a gateway entity of the residential network; and receiving data regarding content of the notification from the gateway entity by driving an application relating to the notification based on the data regarding the type of the notification, wherein the gateway entity relays the data regarding the type of the notification and the data regarding content of the notification provided from the outside of the residential network to the terminal entity.

According to another aspect of the present invention, there is provided a method of receiving a notification in a terminal entity, the method including: receiving data regarding a type of a notification and data regarding content of the notification provided from an outside of a residential network through a gateway entity of the residential network; driving an application relating to the notification based on the data regarding the notification; and extracting the content of the notification from the data regarding content of the notification by using an application programming interface (API) of the application, wherein the gateway entity relays the data regarding the type of the notification and the data regarding content of the notification provided from the outside of the residential network to the terminal entity.

According to another aspect of the present invention, there is provided an apparatus for receiving a notification relating to a service, the apparatus including: an application driving unit for driving an application relating to the service and initializing the service provided from an outside of a residential network through a gateway entity of the residential network; and a notification receiving unit for transmitting information regarding a session of the initialized service to the gateway entity and receiving the notification relating to the service from the gateway entity, wherein the gateway entity relays a notification provided from the outside of the residential network to the terminal entity based on the information regarding the session of the service.

According to another aspect of the present invention, there is provided an apparatus for receiving a notification, the apparatus including: an application selection unit for receiving data regarding a type of the notification provided from an outside of a residential network through a gateway entity of the residential network and selecting an application that is to be driven based on the data regarding the type of the notification; an application driving unit for driving the selected application; and a notification receiving unit for extracting the content of the notification from the data regarding content of the notification by using an API of the application.

According to another aspect of the present invention, there is provided a computer readable recording medium having embodied thereon a computer program for executing the method of receiving a notification.

### MODE OF THE INVENTION

Hereinafter, embodiments of the present invention will be described with reference to accompanying drawings.

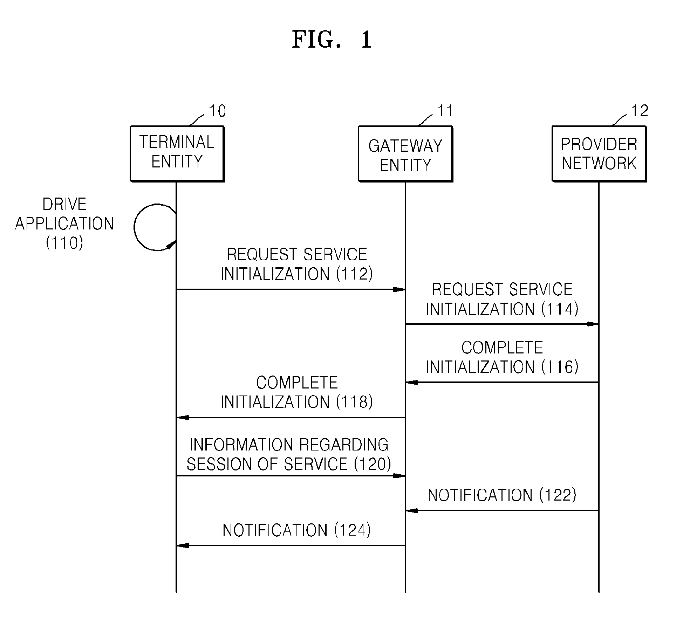

FIG. 1 is a flowchart illustrating a method of receiving an in-session notification according to an embodiment of the present invention. FIG. 1 shows a case where a notification is related to a service in which a session is previously set.

Referring to FIG. 1, a terminal entity 10 is an entity to which a predetermined service is provided from the provider network 12. The terminal entity 10 uses the service of the provider network 12 through a gateway entity 11 included in the same residential network.

The service may be an Internet protocol television (IPTV) service. The terminal entity 10 may be a terminal entity according to an open IPTV functional architecture. The gateway entity 11 may be an IP Multimedia Subsystem (IMS) gateway (IG) entity according to the open IPTV functional architecture. An entity of the provider network 12 may be any entities that provide the IPTV service to a residential network according to the open IPTV functional architecture.

In operation 110, the terminal entity 10 drives an application for using a service provided by the entity of the provider network 12. The application driven by the terminal entity 10 is an application related to the IPTV service for using a variety of services, such as a media service, a content on demand (CoD) service, a chatting service, a presence service, and the like. For example, the terminal entity 10 drives a media reproduction application for reproducing media data or a chatting application for using the chatting service.

In operation 112, the terminal entity 10 requests the gateway entity 11 to initialize a predetermined service according to the application driven in operation 110. The terminal entity 10 may request the gateway entity 11 to initialize the service by transmitting a hypertext transfer protocol (HTTP) request message generated according to the open IPTV functional architecture to the gateway entity 11.

In operation 114, the gateway entity 11 requests the entity of the provider network 12 to initialize the service. The gateway entity 11 transmits the request message transmitted by the terminal entity 10 in operation 112 to the entity of the provider network 12. The gateway entity 11 may requests the entity of the provider network 12 to initialize the service by converting the HTTP request message received in operation 112 into a session initialization message and transmitting the session initialization message according to a session initialization protocol (SIP) to the entity of the provider network 12.

In operation 116, the entity of the provider network 12 transmits an initialization complete message indicating that the service requested in operation 114 has been completely initialized to the gateway entity 11. The entity of the provider network 12 may transmit a response message generated according to the SIP to the gateway entity 11.

In operation 118, the gateway entity 11 transmits the initialization complete message indicating that the service requested in operation 112 has been completely initialized to the terminal entity 10. The gateway entity 11 may convert the response message generated according to the SIP and received in operation 116 into a HTTP response message and transmit the HTTP response message to the terminal entity 10.

In operation 120, the terminal entity 10 transmits information regarding a session of the service initialized in operations 112 through 118 to the gateway entity 11. The terminal entity 10 may transmit the information regarding the session of the service to the gateway entity 11 so that the gateway entity 11 can precisely relay a notification to the application that is being driven.

A case where applications #1 - ∼ #n are being driven in such a way that the terminal entity 10 can use services #1 ∼ #n will now be described. When the gateway entity 11 receives the notification relating to the service #1 used by the application #1 from the provider network 12, the gateway entity 11 must transmit the notification to the application #1.

This applies a case where a single residential network includes a plurality of terminal entities. The gateway entity 11 must precisely transmit the notification to the terminal entity 10, among the terminal entities, which has initialized the service in operations 112 through 118.

Thus, in operation 120, the terminal entity 10 transmits the information regarding the session of the service initialized in operations 112 through 118 to the gateway entity 11, as information for specifying the terminal entity 10 and the application.

The messages generated according to the SIP that are transmitted and received between the entities in operations 112 through 118 for initializing the service each include a call identifier for identifying each service session, i.e. "CaIIID". In operation 120, the terminal entity 10 can transmit the call identifier to the gateway entity 11 as the information regarding the session of the service initialized in operations 112 through 118.

In operation 122, the entity of the provider network 12 transmits a notification relating to the service initialized in operations 112 through 118 to the gateway entity 11.

In operation 124, the gateway entity 11 transmits the notification received in operation 122 to the terminal entity 10 based on the information regarding the session of the service received in operation 122. The gateway entity 11 compares the call identifier received in operation 120 with a call identifier of the notification received in operation 122 and transmits a notification to the application that is being driven by the terminal entity 10.

The notification may be transmitted according to a protocol defined for communications between the terminal entity 10 and the gateway entity 11 that are the entities of the residential network. For example, the gateway entity 11 may transform the notification received in operation 122 into a format of a HTTP document according to the open IPTV functional architecture and transmit the transformed notification to the terminal entity 10. When the notification received in operation 122 is generated according to the SIP, the gateway entity 11 may transform each field value of the SIP into a tag value of the HTTP document and transmit the tag value to the terminal entity 10.

Operations 120 through 124 may be performed according to an asynchronous JavaScript and XML (AJAX). In other words, when the terminal entity 10 transmits the information 120 regarding the session of the service to the gateway entity 11 in operation 120, the gateway entity 11 requests the terminal entity 10 according to the AJAX to relay received notification if the gateway entity 11 receives the notification relating to the service. Such a request according to the AJAX is valid from the gateway entity 11 receives the notification relating to the service in operation 122 until the gateway entity 11 transmits the notification to the terminal entity 10 in operation 124.

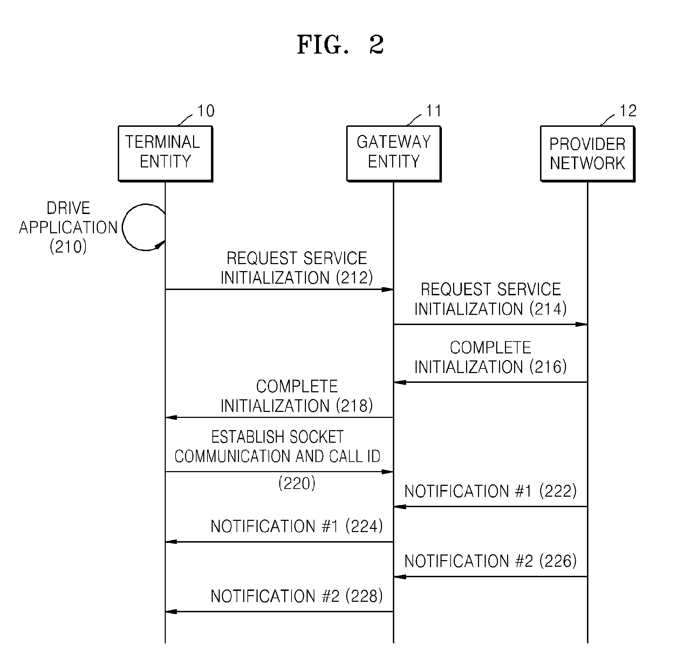

FIG. 2 is a flowchart illustrating a method of receiving an in-session notification according to another embodiment of the present invention. FIG. 2 shows a case where a notification is related to a service in which a session is previously set, like FIG. 1.

Referring to FIG. 2, in operation 210, the terminal entity 10 drives an application to use a service provided by an entity of the provider network 12. Operation 210 is the same as operation 110 of FIG. 1.

In operation 212, the terminal entity 10 requests the gateway entity 11 to initialize a predetermined service according to the application driven in operation 210. Operation 212 is the same as operation 112 of FIG. 1.

In operation 214, the gateway entity 11 requests the entity of the provider network 12 to initialize the service. Operation 214 is the same as operation 114 of FIG. 1.

In operation 216, the entity of the provider network 12 transmits an initialization complete message indicating that the service requested in operation 214 has been completely initialized to the gateway entity 11. Operation 216 is the same as operation 116 of FIG. 1.

In operation 218, the gateway entity 11 transmits the initialization complete message indicating that the service requested in operation 212 has been completely initialized to the terminal entity 10. The gateway entity 11 may convert a response message generated according to the SIP and received in operation 216 into a HTTP response message and transmit the HTTP response message to the terminal entity 10.

The response message indicating that the service has been completely initialized and transmitted to the terminal entity 10 in operation 218 may include information regarding a socket communication that receives a notification relating to a service.

In operations 218 through 228, the method of receiving the in-session notification of the present embodiment transmits and receives a notification relating to the service initialized in operations 212 through 218 through the socket communication.

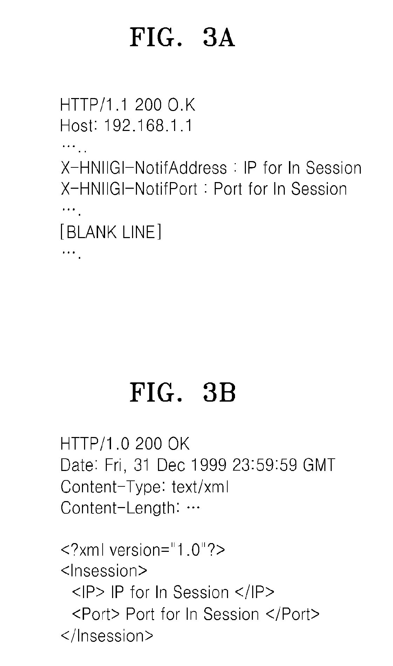

Thus, the initialization complete message transmitted from the gateway entity 11 to the terminal entity 10 may include a plurality of pieces of information for establishing the socket communication for transmitting and receiving the notification. For example, the initialization complete message may include information regarding sockets allocated by the gateway entity 11 for the socket communication for transmitting and receiving the notification, i.e. information regarding an IP address and a port number. The gateway entity 11 allocate different sockets to service sessions, i.e. call identifiers, to precisely transmit the notification received from the entity of the provider network 12 to the application. This will be described with reference to FIGS. 3A and 3B.

FIGS. 3A and 3B illustrate a hypertext transfer protocol (HTTP) response message including information regarding a socket according to an embodiment of the present invention.

Referring to FIGS. 3A and 3B, the information regarding the socket may be included in a header or a body of the HTTP response message transmitted to the terminal entity 10 in operation 218.

Still referring to FIG. 2, in operation 220, the terminal entity 10 establishes a socket communication for receiving the notification relating to the service initialized in operations 212 through 218 based on the information regarding the socket included in the initialization complete message received in operation 218.

A plug-in for transmitting and receiving the notification from among plug-ins of the application driven in operation 210 may be driven to establishes the socket communication. The terminal entity 10 can transmit the call identifier to the gateway entity 11.

In operation 222, the gateway entity 11 receives the notification relating to the service initialized in operations 212 through 218 from the entity of the provider network 12.

In operation 224, the gateway entity 11 transmits the notification received in operation 222 to the terminal entity 10. The gateway entity 11 transmits the notification received in operation 222 to the terminal entity 10 based on the information regarding the socket transmitted to the terminal entity 10 in operation 218 and the call identifiers received from the terminal entity 10 in operation 220.

The gateway entity 11 determines whether the information regarding the call identifier included in the notification #1 received in operation 222 is the same as the call identifier received in operation 220, and, if the call identifiers are determined to be the same, in operation 224, transmits the notification received in operation 222 through the socket communication established in operation 220 to the terminal entity 10.

If the call identifiers are determined to be different, since sockets, i.e. IP addresses and port numbers are different, although a plurality of applications are driven by the terminal entity 10, the notification received in operation 222 is transmitted to the application driven in operation 210.

In operation 226, the gateway entity 11 receives another notification from the entity of the provider network 12. In operation 228, the gateway entity 11 transmits the notification received in operation 226 to the terminal entity 10 as a notification relating to the service initialized in operations 212 through 218. Unlike transmitting and receiving of the notification using the AJAX, operations 220 through 228 of FIG. 2 use the socket communication to transmit and receive the notifications. Thus, once the socket communication is established, the gateway entity 11 may continuously transmit the notification relating to the service to the terminal entity 10, without a request for a relay of the notification.

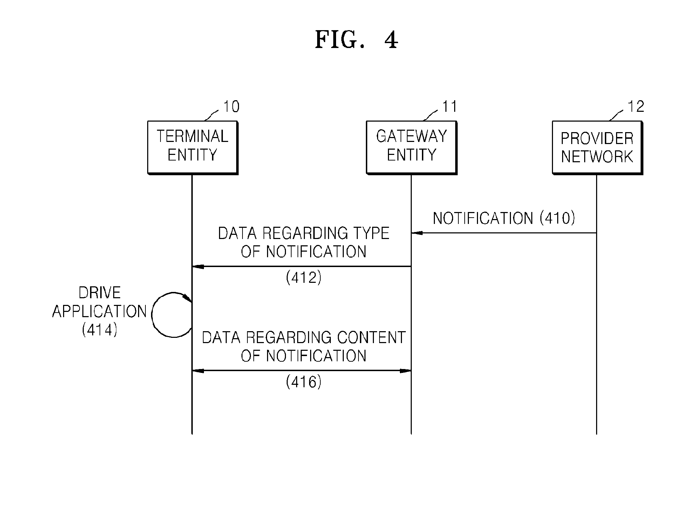

FIG. 4 is a flowchart illustrating a method of receiving an out-of-session notification according to an embodiment of the present invention. FIG. 4 shows a case where a notification is related to a service in which a session is not set.

In operation 410, the gateway entity 11 receives a notification from an entity of the provider network 12. The received notification is related to a service in which a current session is not set, and may be generated according to a SIP.

In operation 412, the gateway entity 11 transmits data regarding a type of the notification received in operation 410 to the terminal entity 10.

Methods of transmitting the data regarding the type of the notification from the gateway entity 11 to the terminal entity 10 in operation 410 includes a method of transmitting the data regarding the type of the notification from the gateway entity 11 to the terminal entity 10 based on an IP multicast, a method of previously requesting the gateway entity 11 for the out-of-session notification regarding a user by using an AJAX and transmitting the data regarding a type of the out-of-session notification from the gateway entity 11 to the terminal entity 10 in response to the request when the user logs in the terminal entity 10, or a method of transmitting an IP address and a port for a socket communication, connecting the IP address and the port to a specific socket, and transmitting the data regarding the type of the notification from the gateway entity 11 to the terminal entity 10 through a communication of the connected socket when the user logs in the terminal entity 10.

In operation 412, the gateway entity 11 determines whether the notification received in operation 410 is a notification regarding a user of the terminal entity 10 that logs in the gateway entity 11.

If the notification received in operation 410 is generated according to the SIP, since a user who receives the notification is specified in a field "To", in operation 412, the gateway entity 11 compares a value of the field "To" with information regarding the user who logs in the gateway entity 11. If the value of the field "To" is the same as the information regarding the user who logs in the gateway entity 11, the gateway entity 11 transmits the data regarding the type of the notification to the terminal entity 10.

According to the present embodiment, the data regarding the type of the notification transmitted from the gateway entity 11 to the terminal entity 10 in operation 412 may include information regarding a uniform resource locator (URL) of an application that is required to be driven by the terminal entity 10. The gateway entity 11 transmits the data regarding the type of the notification including the URL of the application required to be driven to process the notification to the terminal entity 10 so that the terminal entity 10 drives the designated application only.

Further, the data regarding the type of the notification may include parameters relating to the driving of the application. For example, the data regarding the type of the notification transmitted to the terminal entity 10 in operation 412 may include field values, such as "CaIIID", "To", "From", etc., according to the SIP necessary for driving the application and initializing a service.

In operation 414, the terminal entity 10 drives an application for processing the received notification based on the data regarding the type of the notification received in operation 412. The terminal entity 10 selects the application to be driven based on the data regarding the type of the notification and drives the selected application. For example, if the notification received from the gateway entity 11 in operation 412 is a notification regarding a chatting invitation, the terminal entity 10 drives a chatting application, and, if the notification received from the gateway entity 11 in operation 412 is a notification regarding a content transmission, the terminal entity 10 drives a download application for receiving content.

As described above, if the data regarding the type of the notification includes URL information regarding an application to be processed, the terminal entity 10 drives an application defined according to the URL information. In this regard, the terminal entity 10 may drive the application according to the parameters relating to the driving of the application.

In operation 416, the terminal entity 10 receives data regarding content of the notification based on the application driven in operation 414 from the gateway entity 11.

The data regarding the content of the notification may be transmitted and received according to the AJAX in operation 416. The terminal entity 10 requests the gateway entity 11 to relay the data regarding the content of the notification received in operation 410, and receives the data regarding the content of the notification in response to the request.

Further, the data regarding the content of the notification may be transmitted and received through a socket communication in operation 416. The terminal entity 10 receives information regarding sockets allocated by the gateway entity 11 when receiving the data regarding the type of the notification in operation 412, and establishes the socket communication for transmitting and receiving the notification based on the information regarding the sockets in operation 416. Thereafter, the terminal entity 10 transmits and receives the content of the notification through the established socket communication.

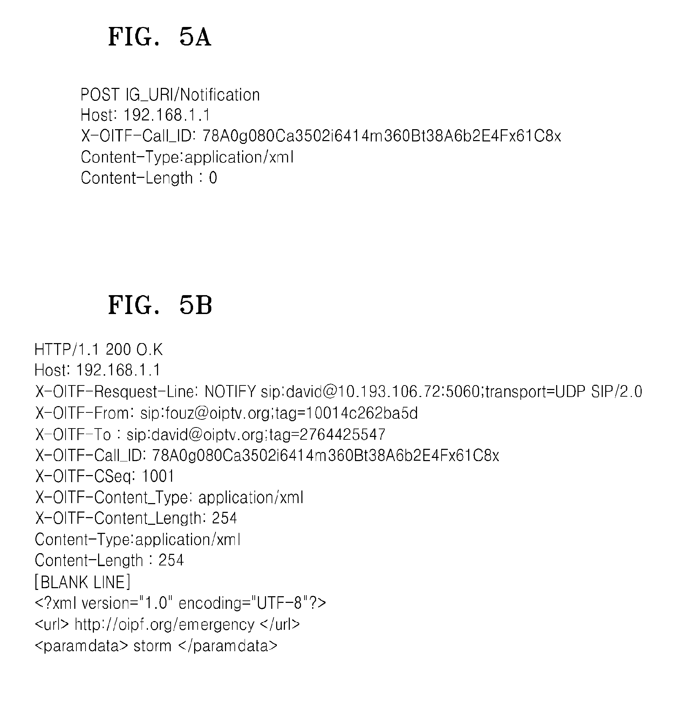

FIGS. 5A and 5B illustrate data request and response messages regarding content of a notification according to an embodiment of the present invention.

FIGS. 5A and 5B illustrate request and response messages when data regarding the content of the notification is transmitted and received according to the AJAX.

Referring to FIG 5A, in operation 416, the terminal entity 10 transmits information regarding a session of a service relating to the notification received in operation 410, i.e. a HTTP request message including a call identifier, to the gateway entity 11, and receives a HTTP response message shown in FIG. 5B in response to the HTTP request message. The HPPT response message includes a tag "paramdata" that is the content of the notification.

The call identifier included in the HTTP request message of FIG. 5A is the same as a call identifier included in the notification received in the gateway entity 11 from the provider network 12 in operation 410. The gateway entity 11 transmits information regarding the call identifier when transmitting the data regarding the type of the notification to the terminal entity 10 in operation 412.

The gateway entity 11 transmits the HTTP response message to the terminal entity 10 only when the call identifier included in the HTTP request message is the same as the call identifier included in the notification received in operation 410.

The data regarding the content of the notification transmitted to the terminal entity 10 through the socket communication or the AJAX in operation 416 may be in a format of a HTTP document as shown in FIG. 5A, or in a format of a general XML document.

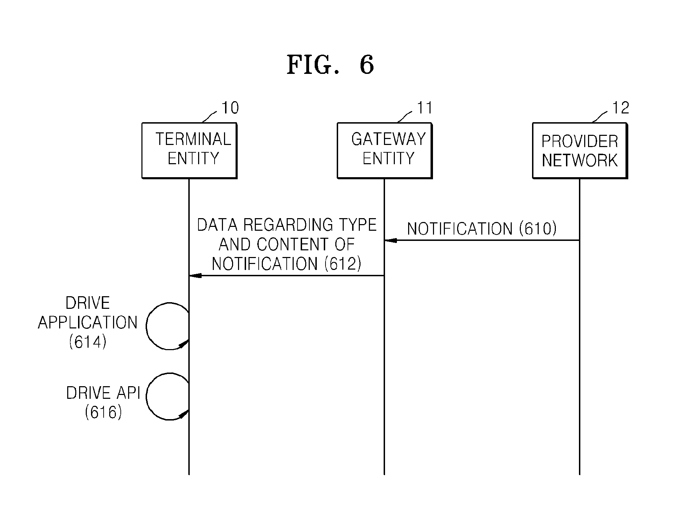

FIG. 6 is a flowchart illustrating a method of receiving an out-of-session notification according to another embodiment of the present invention.

Referring to FIG. 6, in operation 610, the gateway entity 11 receives a predetermined notification from an entity of the provider network 112. Operation 610 is the same as operation 410 of FIG. 4.

In operation 612, the gateway entity 11 transmits the notification received in operation 610 to the terminal entity 10. The gateway entity 11 transmits data regarding a type of the notification and data regarding content thereof to the terminal entity 10.

Methods of transmitting the data regarding a type of the notification and the data regarding content thereof from the gateway entity 11 to the terminal entity 10 in operation 612 includes a method of transmitting the data regarding the type of the notification and the data regarding content thereof from the gateway entity 11 to the terminal entity 10 based on an IP multicast, a method of previously requesting the gateway entity 11 for the out-of-session notification regarding a user by using an AJAX and transmitting the data regarding the type of the notification and the data regarding content thereof from the gateway entity 11 to the terminal entity 10 in response to the request when the user logs in the terminal entity 10, or a method of transmitting an IP address and a port for a socket communication, connecting the IP address and the port to a specific socket, and transmitting the data regarding the type of the notification and the data regarding content thereof from the gateway entity 11 to the terminal entity 10 through a communication of the connected socket when the user logs in the terminal entity 10.

In operation 614, the terminal entity 10 drives an application for processing the received notification based on the data regarding the type of the notification received in operation 612. The terminal entity 10 selects an application to be driven based on the data regarding the type of the notification and drives the selected application to use a service.

In operation 616, the terminal entity 10 extracts the content of the notification from the data regarding the content of the notification based on the application driven in operation 614. The terminal entity 10 extracts the content of the notification from data regarding content of the application by using an application programming interface (API) of the application driven in operation 614. If the data regarding the content of the application is in a format of an XML document, the terminal entity 10 extracts a value from a predetermined tag of the XML document.

For example, when the terminal entity 10 extracts a letter string from a tag "paramdata" of the XML document by using an API "getdata", the terminal entity 10 may extract the content of the notification by using a syntax "getdata(pramdata)".

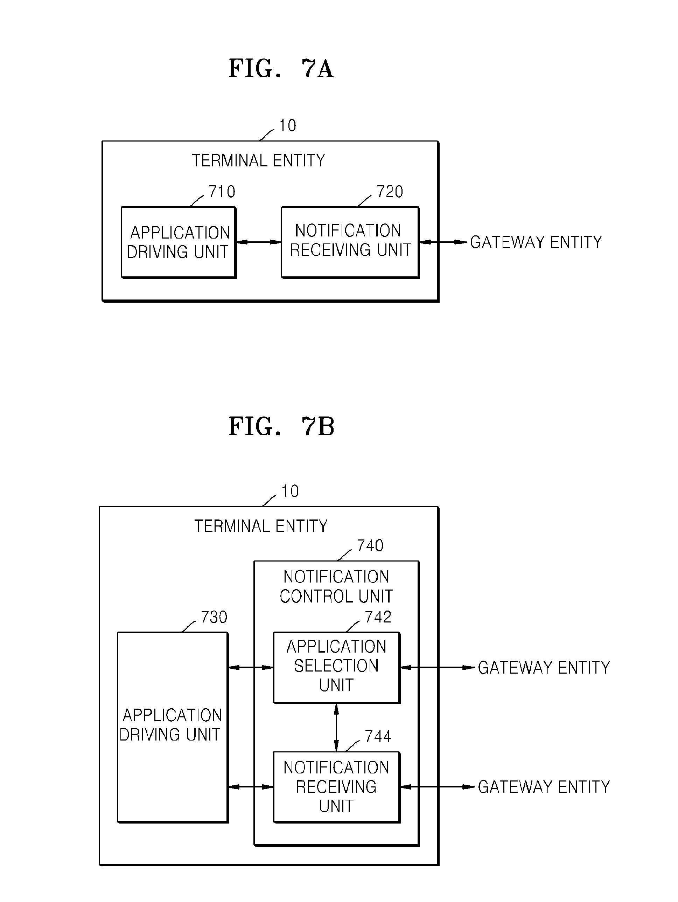

FIG. 7A is a block diagram of a notification receiving apparatus of the terminal entity 10 according to an embodiment of the present invention. FIG. 7A shows a case where the terminal entity 10 receives an in-session notification.

Referring to FIG. 7A, the terminal entity 10 of the present embodiment includes an application driving unit 710 and a notification receiving unit 720.

The application driving unit 710 drives an application relating to a predetermined service. The service provided from the outside of a residential network is initialized according to the driving of the application by a gateway entity of the same residential network.

A HTTP request message generated according to an open IPTV functional architecture is transmitted to the gateway entity. The gateway entity converts the HTTP request message into a session initialization message according to a SIP and transmits the session initialization message to an entity of a provider network so as to request an initialization of the service.

During the initialization of the service, information regarding sockets allocated by the gateway entity, i.e. an IP address and a port number, for a socket communication that transmits and receives a notification may be received from the gateway entity.

The notification receiving unit 720 receives a notification relating to the service initialized in the application driving unit 710. The notification receiving unit 720 transmits information regarding a session of the service initialized in the application driving unit 710 to the gateway entity, and receives the notification from the gateway entity based on the transmitted information regarding the session of the service. The information regarding the session of the service may be information regarding a call identifier CaIIID used by the terminal entity 10.

The notification receiving unit 720 may receive the notification according to an AJAX. When transmitting the information regarding the session of the service to the gateway entity, the notification receiving unit 720 requests the gateway entity to relay received notification to the terminal entity 10 if the notification receiving unit 720 receives the notification according to the AJAX. Such a request according to the AJAX is valid from the gateway entity receives the notification relating to the service until the gateway entity transmits the received notification to the terminal entity 10.

Further, the notification receiving unit 720 may receive the notification through a socket communication. The notification receiving unit 720 establishes the socket communication, based on information regarding sockets allocated by the gateway entity, i.e. an IP address and a port number, for the socket communication that transmits and receives the notification received when the application driving unit 710 initializes the service, and receives the notification relating to the service through the established socket communication.

FIG. 7B is a block diagram of a notification receiving apparatus of the terminal entity 10 according to another embodiment of the present invention. FIG. 7B shows a case where the terminal entity 10 receives an out-of-session notification.

Referring to FIG. 7B, the terminal entity 10 of the present embodiment includes an application driving unit 730 and a notification control unit 740. The notification control unit 740 includes an application selection unit 742 and a notification receiving unit 744.

The application driving unit 730 receives data regarding a type of a notification from the notification control unit 740 and drives a predetermined application. The application driving unit 730 drives the application to use a service provided from an entity outside of a residential network.

The notification control unit 740 receives the data regarding the type of the notification and data regarding content thereof from a gateway entity and selects an application that is to be driven by the application driving unit 730.

The application selection unit 742 receives the data regarding the type of the notification from the gateway entity and selects the application that is to be driven by the application driving unit 730. If the data regarding the type of the notification includes information regarding an URL of the application that is to be driven, the application selection unit 742 selects the application that is to be driven based on the information regarding the UTL of the application.

The notification receiving unit 744 receives the data regarding the content of the notification from the gateway entity.

The notification receiving unit 744 may receive the notification according to an AJAX. The notification receiving unit 744 requests the gateway entity to transmit the notification and receive the data regarding the content of the notification in response to the request.

Further, the notification receiving unit 744 may receive the data regarding the content of the notification from the gateway entity through a socket communication that transmits and receives a notification established by a plug-in of an application that is being driven by the application driving unit 730.

When the notification receiving unit 744 simultaneously receives the data regarding the content of the notification and the data regarding the type of the notification from the gateway entity, the notification receiving unit 744 does not need to receive the data regarding the content of the notification again from the gateway entity, and extracts the content of the notification from the data regarding the content of the notification by using an API used to extract the content of the notification.

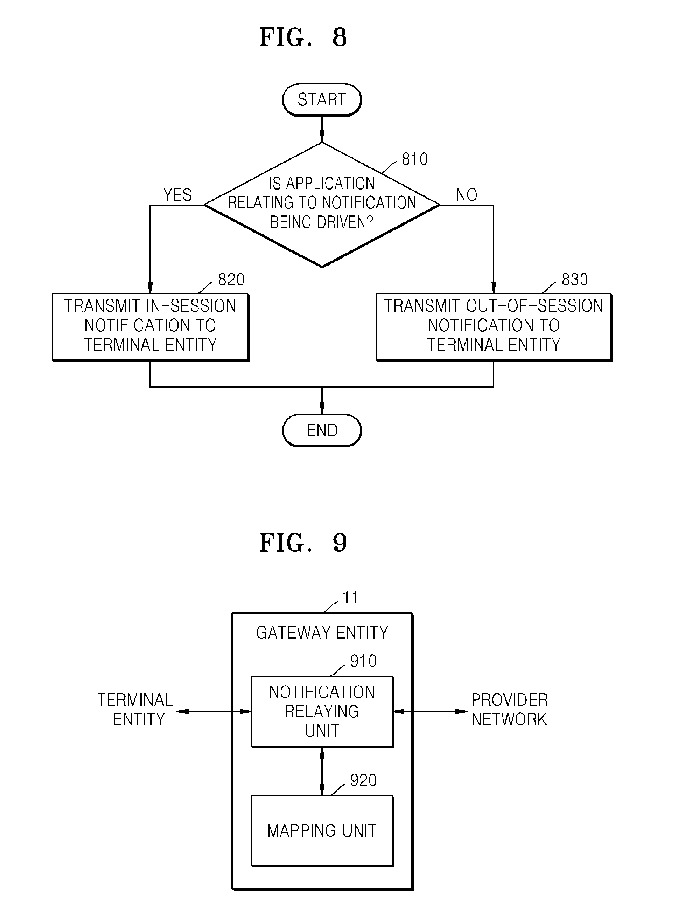

FIG. 8 is a flowchart illustrating a method of relaying a notification in a gateway entity according to an embodiment of the present invention.

Referring to FIG. 8, in operation 810, the gateway entity determines whether an application relating to the notification received from an entity outside a residential network is being driven by a terminal entity.

First, the gateway entity compares information regarding a user of the terminal entity included in the notification with information regarding a user who logs in the gateway entity and determines whether a user receiving the notification is the user who logs in the gateway entity. For example, when the notification is generated according to a SIP, since the user receiving the notification is defined in a field "To", the gateway entity compares a value of the field "To" with information regarding the user who logs in the gateway entity.

If the user receiving the notification is the user who logs in the gateway entity, the gateway entity determines whether the user is currently driving the application relating to the received notification. The gateway entity compares the notification with information regarding at least one session of a user's service that is being relayed and determines whether the application relating to the notification is being driven.

The gateway entity may determine whether sockets for transmitting and receiving the received notification are allocated. If the sockets for transmitting and receiving the notification are previously allocated with respect to a call identifier of the notification, the gateway entity may determine that an application relating to the received notification is being driven.

Further, the gateway entity may determine that the application relating to the received notification is being driven if a call identifier for a transmission request of a notification received from the terminal entity according to an AJAX and a call identifier of the notification received from the entity outside the residential network.

If the gateway entity determines that the application relating to the notification is being driven by the terminal entity in operation 810, in operation 820, the gateway entity transmits an in-session notification to the terminal entity. A method of transmitting the in-session notification from the gateway entity to the terminal entity is the same as described with reference to FIGS. 1 and 2.

If the gateway entity determines that the application relating to the notification is not being driven by the terminal entity in operation 810, in operation 830, the gateway entity transmits an out-of-session notification to the terminal entity. A method of transmitting the out-of-session notification from the gateway entity to the terminal entity is described with reference to FIGS. 4 and 6.

FIG. 9 is a block diagram of the gateway entity 11 according to an embodiment of the present invention.

Referring to FIG. 9, the gateway entity 11 of the present embodiment includes a notification relaying unit 910 and a mapping unit 920.

The notification relaying unit 910 transmits a notification received from an entity of a provider network to a terminal entity. The notification relaying unit 910 determines whether an application relating to the notification is being driven by the terminal entity and transmits an in-session notification or an out-of-session notification to the terminal entity.

The mapping unit 920 allocates sockets for transmitting and receiving the notification, i.e. an IP address and a port number, and stores mapping information by mapping the allocated sockets to call identifiers one-to-one. If the notification relaying unit 910 transmits the in-session notification to the terminal entity, the notification relaying unit 910 transmits the notification to the terminal entity through a socket allocated to the same call identifier as a call identifier of the notification received from the entity of the provider network based on the mapping information.

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

For example, the notification receiving apparatus and the notification relaying apparatus according to the exemplary embodiment of the present invention may include a bus coupled to each of the units in the apparatuses shown in FIGS. 7A, 7b, and 8, and at least one processor coupled to the bus. In addition, the apparatuses may include a memory that is coupled to the bus in order to store commands, received messages, and generated messages, and that is coupled to the at least one processor for performing the above commands.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc. The computer readable recording medium can also be distributed over network coupled computer systems so that the computer readable code is stored and executed in a distributed fashion.

## Claims

1. A method of receiving a notification relating to a service in a terminal entity, the method comprising:
initializing the service provided from an outside of a residential network through a gateway entity of the residential network by driving an application relating to the service;
transmitting information regarding a session of the initialized service to the gateway entity; and
receiving the notification relating to the service from the gateway entity,
wherein the gateway entity relays a notification provided from the outside of the residential network to the terminal entity based on the information regarding the session of the service.

2. The method of claim 1, wherein the terminal entity is a terminal entity according to an open IPTV functional architecture, and
the gateway entity is an IP multimedia subsystem (IMS) gateway (IG) entity according to the open IPTV functional architecture.

3. The method of claim 2, wherein the initializing of the service comprises:
receiving, from the gateway entity, an Internet protocol (IP) and a port number of the gateway entity that are to be accessed by the terminal entity to receive the notification.

4. The method of claim 3, wherein the transmitting of the information comprises: transmitting information regarding a call identifier of the session of the service used by the terminal entity to the gateway entity.

5. The method of claim 2, wherein the receiving of the notification comprises:
receiving the notification through a socket communication established by connecting a plug-in of the application to the gateway entity based on the IP address and the port number received from the gateway entity.

6. The method of claim 2, wherein the receiving of the notification comprises:
receiving the notification according to an asynchronous JavaScript and XML (AJAX).

7. A method of receiving a notification in a terminal entity, the method comprising:
receiving data regarding a type of a notification provided from an outside of a residential network through a gateway entity of the residential network; and
receiving data regarding content of the notification from the gateway entity by driving an application relating to the notification based on the data regarding the type of the notification,
wherein the gateway entity relays the data regarding the type of the notification and the data regarding content of the notification provided from the outside of the residential network to the terminal entity.

8. The method of claim 7, wherein the terminal entity is a terminal entity according to an open IPTV functional architecture, and
the gateway entity is an IG entity according to the open IPTV functional architecture.

9. The method of claim 8, wherein the receiving of the data regarding content of the notification comprises: receiving the data regarding content of the notification through a socket communication established by connecting a plug-in of the application to the gateway entity.

10. The method of claim 8, wherein the receiving of the data regarding content of the notification comprises: receiving the notification according to an AJAX.

11. A method of receiving a notification in a terminal entity, the method comprising:
receiving data regarding a type of a notification and data regarding content of the notification provided from an outside of a residential network through a gateway entity of the residential network;
driving an application relating to the notification based on the data regarding the notification; and
extracting the content of the notification from the data regarding content of the notification by using an application programming interface (API) of the application,
wherein the gateway entity relays the data regarding the type of the notification and the data regarding content of the notification provided from the outside of the residential network to the terminal entity.

12. The method of claim 11, wherein the terminal entity is a terminal entity according to an open IPTV functional architecture, and
the gateway entity is an IG entity according to the open IPTV functional architecture.

13. An apparatus for receiving a notification relating to a service, the apparatus comprising:
an application driving unit for driving an application relating to the service and initializing the service provided from an outside of a residential network through a gateway entity of the residential network; and
a notification receiving unit for transmitting information regarding a session of the initialized service to the gateway entity and receiving the notification relating to the service from the gateway entity,
wherein the gateway entity relays a notification provided from the outside of the residential network to the terminal entity based on the information regarding the session of the service.

14. The apparatus of claim 13, wherein the notification receiving unit receives the notification through a socket communication established by connecting a plug-in of the application to the gateway entity based on an IP address and a port number received from the gateway entity.

15. The apparatus of claim 14, wherein the notification receiving unit receives the notification according to an AJAX.

16. An apparatus for receiving a notification, the apparatus comprising:
an application selection unit for receiving data regarding a type of the notification provided from an outside of a residential network through a gateway entity of the residential network and selecting an application that is to be driven based on the data regarding the type of the notification;
an application driving unit for driving the selected application; and
a notification receiving unit for receiving data regarding content of the notification from the gateway entity based on the application.

17. The apparatus of claim 16, wherein the notification receiving unit receives the notification through a socket communication established by connecting a plug-in of the application to the gateway entity.

18. The apparatus of claim 16, wherein the notification receiving unit receives the notification according to an AJAX.

19. An apparatus for receiving a notification, the apparatus comprising:
an application selection unit for receiving data regarding a type of the notification provided from an outside of a residential network through a gateway entity of the residential network and selecting an application that is to be driven based on the data regarding the type of the notification;
an application driving unit for driving the selected application; and
a notification receiving unit for extracting the content of the notification from the data regarding content of the notification by using an API of the application.

20. A computer readable recording medium having embodied thereon a computer program for executing the method according to one of claims 1 through 15.
